# FASCICULE DE BREVET EUROPEEN

(11) **EP 0 574 316 B1**
(45) Date de publication et mention de la délivrance du brevet: **18.09.1996**
(21) Numéro de dépôt: 93401479.6
(22) Date de dépôt: 10.06.1993
(51) Int. Cl.: B60S 1/34

(54) **Essuie-glace de véhicule automobile comportant des moyens de commande de la valeur du couple d'essuyage**
Scheibenwischer für Kraftfahrzeuge mit Vorrichtung zum Regeln des Wischeranpressdrucks
Wiper for a motor vehicle with means to control the wiping pressure

(30) Priorité: 12.06.1992 FR 9207119
(43) Date de publication de la demande: 15.12.1993
(73) Titulaire: VALEO SYSTEMES D'ESSUYAGE, 78180 Montigny-Le-Bretonneux (FR)
(72) Inventeur: Eustache, Jean-Pierre, F-92160 Antony (FR)
(74) Mandataire: Gamonal, Didier

(56) Documents cités:
- WO-A-81/00235
- DE-A- 3 444 927
- DE-A- 3 643 733
- DE-A- 4 033 201

## Description

La présente invention concerne un essuie-glace, notamment de véhicule automobile, du type comportant un bras d'essuie-glace qui porte au moins un balai d'essuyage et qui est monté articulé, autour d'un axe d'articulation, sur une tête d'entraînement du bras d'essuie-glace.

La tête d'entraînement est soumise à un mouvement de rotation alternatif par un arbre d'essuyage afin d'obtenir un balayage de la vitre à essuyer.

Le bras d'essuie-glace porte, par l'intermédiaire du porte-balai, un balai d'essuyage articulé qui est apte à essuyer la surface vitrée telle que par exemple un pare-brise de véhicule automobile.

Afin d'obtenir un essuyage efficace de la surface vitrée, il est nécessaire que la lame d'essuyage de l'essuie-glace soit appliquée sur la surface vitrée à essuyer avec une force de pression, ou force d'essuyage, suffisamment importante.

Dans ce but, il est connu de prévoir au moins un ressort, tel que par exemple un ressort hélicoïdal de compression ou de traction, qui est agencé entre la tête d'entraînement et le bras d'essuie-glace et qui applique à ce dernier une force dont la droite support n'est pas concourante avec l'axe d'articulation du bras d'essuie-glace sur la tête d'entraînement de manière à appliquer en fait au bras d'essuie-glace un couple d'essuyage, également appelé couple nominal d'essuyage dont la valeur est sensiblement constante.

Du fait de la conception de ce type de dispositif, la lame d'essuyage est appuyée pendant le mouvement de balayage de la surface vitrée, mais également en position de repos de l'essuie-glace.

Du fait de la constance de l'effort nominal d'essuyage qui est appliqué à la lame lorsque l'essuie-glace est en position de repos, la lame d'essuyage tend à conserver une déformation résiduelle résultant de l'écrasement de son profil contre la surface galbée de la vitre, la lame ne procurant plus alors un essuyage efficace de la surface vitrée.

Il est donc apparu souhaitable de pouvoir faire varier l'effort d'essuyage appliqué à la lame, notamment lorsque l'essuie-glace est au repos.

Par ailleurs, l'efficacité d'essuyage de la surface vitrée dépend en fonctionnement du contrôle de la valeur de l'effort d'essuyage qui est appliqué à la lame, et ceci notamment en fonction de la vitesse de déplacement du véhicule et de la fréquence du mouvement de balayage de l'essuie-glace.

Il est connu d'accroître la force d'essuyage au moyen d'appendices aérodynamiques montés sur le bras d'essuie-glace, mais on constate que ces dispositifs ne permettent pas de contrôler avec précision la valeur de la force d'essuyage et ne permettent notamment pas de la faire varier de manière contrôlée en fonction d'un ou plusieurs paramètres de fonctionnement du véhicule.

Afin de remédier aux inconvénients qui viennent d'être mentionnés, il a déjà été proposé différentes conceptions d'essuie-glaces selon lesquelles des moyens agencés entre la tête d'entraînement et le bras d'essuie-glace permettent de faire varier la valeur de l'effort de traction ou de compression du ressort.

Notamment, comme décrit dans le document DE-A- 3 444 927, il est connu un essuie-glace du type comportant un bras d'essuie-glace qui porte au moins un balai d'essuyage et qui est monté articulé, autour d'un axe d'articulation, sur une tête d'entraînement du bras d'essuie-glace comportant au moins un ressort agencé entre la tête d'entraînement et le bras d'essuie-glace, dont la première extrémité dudit ressort est reliée à un point du bras d'essuie-glace et la seconde extrémité du ressort est reliée à la tête d'entraînement et qui applique audit bras une force dont la droite support n'est pas concourante avec l'axe d'articulation de manière à appliquer au bras d'essuie-glace un couple d'essuyage et un actionneur dont le corps est associé à la tête d'entraînement et dont l'organe de sortie commande les déplacements de la seconde extrémité du ressort en faisant varier la position de la seconde extrémité du ressort par rapport à l'axe d'articulation, de manière à faire varier la distance entre la droite support de la force et l'axe d'articulation, la première extrémité du ressort étant reliée à une première surface d'appui reliée au bras d'essuie-glace et la seconde extrémité du ressort étant reliée à une seconde surface d'appui formée sur un patin monté coulissant le long d'une surface de guidage formée sur la tête d'entraînement, les déplacements du patin étant commandés par l'organe de sortie de l'actionneur.

Toutes les conceptions connues ont pour inconvénient d'agir directement sur un ou plusieurs ressorts, en en modifiant par exemple la longueur et ne permettent pas d'obtenir un contrôle précis de la force d'essuyage ni une fiabilité suffisante du ressort qui est soumis à des variations importantes de sa constante élastique nominale.

Afin de remédier à ces inconvénients, la présente invention propose un essuie-glace, notamment de véhicule automobile, du type tel que connu de DE-A-3 444 927 cité plus haut et dont les caractéristiques techniques sont énoncées dans le préambule de la revendication 1, caractérisé en ce que le ressort est un ressort hélicoïdal de compression traversé par une tige d'orientation qui définit la droite support de la force, en ce qu'une première extrémité de la tige d'orientation est montée articulée sur le bras d'essuie-glace autour d'un axe parallèle à l'axe d'articulation du bras d'essuie-glace sur la tête d'entraînement, en ce que la tige d'orientation traverse le patin d'appui, et en ce que la seconde extrémité de la tige d'orientation est reliée à l'organe de sortie de l'actionneur.

Grâce à cette caractéristique essentielle de l'invention, il est possible de faire varier, et de contrôler de manière précise la valeur du couple d'essuyage appliqué par le ressort au bras d'essuie-glace sans modifier la valeur de l'effort appliqué par le ressort et donc sans modifier les caractéristiques intrinsèques de ce dernier.

Selon des modes de réalisation de l'invention :
- la seconde extrémité du ressort est susceptible de se déplacer sensiblement le long d'un cercle centré sur le point fixe auquel est reliée la première extrémité du ressort ;
- la surface de guidage du patin d'appui est une portion de surface cylindrique concave dont l'axe est sensiblement confondu avec l'axe d'articulation de la première extrémité de la tige d'orientation ;
- la seconde extrémité du ressort est susceptible de se déplacer le long d'une droite qui, pour une position intermédiaire médiane de la tige d'orientation est sensiblement tangente à un cercle centré sur l'axe d'articulation de la première extrémité de la tige d'orientation ;
- l'actionneur est un actionneur linéaire dont l'organe de sortie est relié à une came qui coopère avec un galet suiveur de came monté à rotation sur la seconde extrémité de la tige d'orientation autour d'un axe de rotation parallèle à l'axe d'articulation de la tige d'orientation ;
- en variante, l'essuie-glace comporte un basculeur d'entraînement monté à rotation autour de la tête d'entraînement autour d'un axe de basculement parallèle à l'axe d'articulation du bras d'essuie-glace, dont une première branche est reliée à l'organe de sortie de l'actionneur et dont une seconde branche est reliée à la seconde extrémité de la tige d'orientation de manière à guider les déplacements de cette dernière sensiblement le long d'un cercle centré sur l'axe de basculement ; et
- la seconde extrémité de la tige d'orientation est montée coulissante dans une fente d'entraînement formée dans la seconde branche du basculeur et qui s'étend selon la direction de cette seconde branche.

D'autres caractéristiques et avantages de l'invention apparaîtront à la lecture de la description détaillée qui va suivre pour la compréhension de laquelle on se reportera aux dessins annexés dans lesquels :
- La figure 1 est une vue schématique en section longitudinale d'un premier mode de réalisation illustrant le principe de fonctionnement d'un essuie-glace conforme aux enseignements de l'invention ;
- la figure 2 est une vue schématique partielle illustrant une variante de réalisation d'un détail de l'essuie-glace de la figure 1 ;
- la figure 3 est une vue en section longitudinale partielle selon la ligne 3-3 de la figure 4 d'un second mode de réalisation d'un essuie-glace conforme aux enseignements de l'invention ;
- la figure 4 est une vue de dessus en section partielle de l'essuie-glace illustré à la figure 3 ;
- la figure 5 est une vue en section selon la ligne 5-5 de la figure 3 ;
- la figure 6 est une vue à plus grande échelle de la partie centrale de la figure 3 ;
- les figures 7 et 8 sont des vues similaires à celle de la figure 6 illustrant deux autres positions de la tige d'orientation du ressort ;
- les figures 9 et 10 sont deux vues similaires à celle de la figure 6 qui illustrent chacune une variante de réalisation.

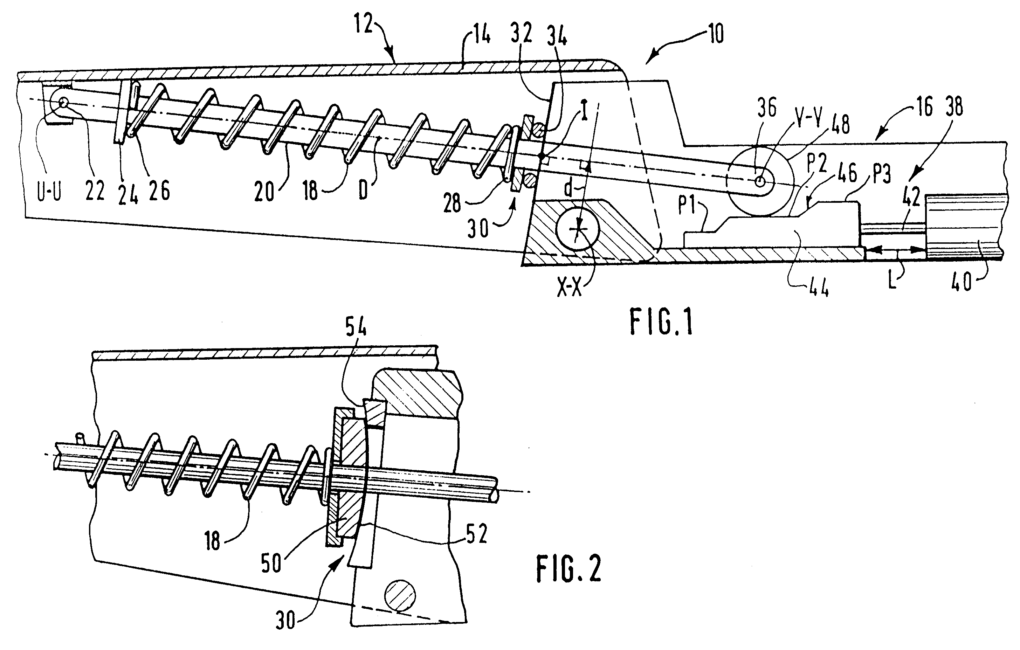

L'essuie-glace 10 illustré à la figure 1 est pour l'essentiel constitué par un bras d'essuie-glace 12 dont le corps ou carter 14 est monté articulé sur une tête d'entraînement 16 autour d'un axe géométrique d'articulation X-X qui s'étend selon une direction sensiblement perpendiculaire à la direction générale longitudinale du bras d'essuie-glace.

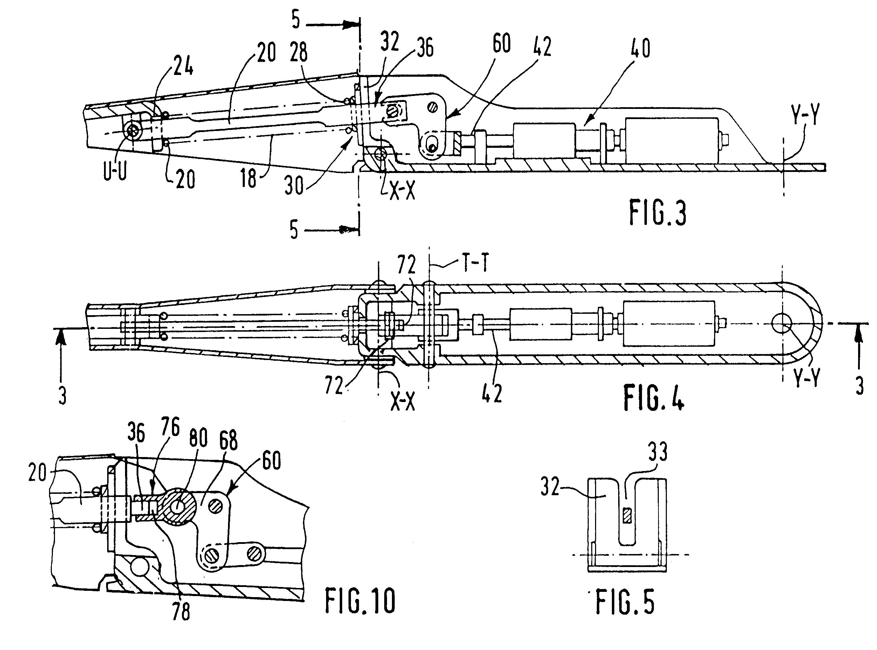

La tête d'entraînement 16 est prévue pour être reliée à un arbre d'entraînement (non représenté) qui provoque son déplacement alternatif autour d'un axe géométrique Y-Y (voir figures 3 et 4) qui est sensiblement perpendiculaire à l'axe d'articulation X-X.

Selon un principe connu, un ressort hélicoïdal de compression 18 est agencé entre le bras d'essuie-glace 12 et la tête d'entraînement 16 de manière à appliquer au bras d'essuie-glace 12 un couple d'essuyage.

Dans ce but, la droite D support de la force de compression exercée par le ressort 18 n'est pas concourante avec l'axe X-X et la valeur du couple d'essuyage appliquée au bras d'essuie-glace 12 est une fonction du produit de la force F de compression du ressort 18 par la distance d entre la droite D et l'axe X-X.

Dans les conceptions connues selon l'état de la technique, la distance d est constante et la valeur du couple d'essuyage est donc elle-même également sensiblement constante.

Conformément à l'invention, il est prévu des moyens pour faire varier la valeur du couple d'essuyage en faisant varier la distance d entre la droite support D et l'axe d'articulation X-X.

Le ressort de compression 18 est traversé sur toute sa longueur par une tige d'orientation rectiligne 20 qui définit la direction de la droite support D.

Une première extrémité 22 de la tige d'orientation 20 est montée articulée sur le carter 14 du bras d'essuie-glace 12 autour d'un axe d'articulation U-U parallèle à l'axe d'articulation X-X.

La tige d'orientation 20 traverse une fente formée dans une patte 24 solidaire du carter 14 et qui constitue une première surface d'appui pour la première extrémité 26 du ressort hélicoïdal de compression 18.

La seconde extrémité 28 du ressort hélicoïdal de compression 18 prend appui, par l'intermédiaire d'un patin d'appui 30, contre une surface plane 32 de la tête d'entraînement 16 qui s'étend dans un plan parallèle à l'axe d'articulation X-X.

Le patin 30 est traversé par la tige d'orientation 20 qui entraîne celui-ci dans ses déplacements en pivotement autour de l'axe U-U.

Le patin 30 comporte par exemple des billes 34 qui roulent sur la surface 32 afin de réduire les efforts de frottement.

La tige d'orientation 20 traverse également la face plane de roulement 32, à travers une fente 33 prévue à cet effet, et sa seconde extrémité 36 coopère avec un dispositif d'actionnement 38.

Le dispositif d'actionnement 38 est constitué par un actionneur linéaire 40 dont le corps est fixé à la tête d'entraînement 16 et dont la tige de sortie 42, qui se déplace selon une direction L sensiblement perpendiculaire à l'axe d'articulation X-X, est équipée d'une came 44 dont le profil de came 46 coopère avec un galet suiveur de came 48 qui est monté à rotation sur la seconde extrémité 36 de la tige d'orientation 20 autour d'un axe de rotation V-V.

Dans l'exemple de réalisation illustré à la figure 1, le profil de came 46 comporte trois paliers P1, P2 et P3 qui, en fonction de la position longitudinale de la came 44, détermine trois positions correspondantes du galet 48 et donc trois positions angulaires correspondantes de la tige d'orientation 20 autour de son axe d'articulation U-U avec la surface 32.

Sur la figure, le galet 48 est en appui sur le palier intermédiaire P2 et détermine ainsi une position médiane de la tige d'orientation 20 qui correspond sensiblement à la valeur nominale du couple d'essuyage appliqué par le ressort 18 et dans laquelle le point d'intersection I de la droite D avec la surface de roulement 32 correspond sensiblement au point de tangence d'un cercle centré sur l'axe U-U.

Des moyens de commande et de contrôle (non représentés) permettent de faire varier la position de la came 44, par exemple en fonction d'un paramètre de fonctionnement du véhicule, de manière à amener le galet 48 en contact avec l'un ou l'autre des deux paliers d'extrémité P1 ou P3.

Lorsque le galet 48 est en appui sur le palier P3, cela correspond à un déplacement angulaire de la tige d'orientation 20 dans le sens anti-horaire en considérant la figure 1, et donc à une augmentation de la distance d entre la droite D et l'axe X-X dont il résulte un accroissement de la valeur globale du couple d'essuyage.

Inversement, lorsque le galet 48 est en appui sur le palier P1, la distance d diminue et la valeur globale du couple d'essuyage est réduite.

On constate que les variations du couple d'essuyage qui peuvent être ainsi obtenues le sont pratiquement sans variation de la longueur du ressort hélicoïdal de compression 18 et donc sans variation de la force nominale F que ce dernier applique au bras d'essuie-glace 12 et à la tête d'entraînement 16 par l'intermédiaire de la patte 24 et du patin 30.

La variante de réalisation illustrée à la figure 2 a pour but de garantir avec plus de précision que le ressort 18 ne subit aucune variation de longueur.

A cet effet, le patin d'appui 30 comporte un élément glissant 50 dont la surface cylindrique convexe 52 est centrée sur l'axe d'articulation U-U et coopère avec une surface cylindrique concave complémentaire 54 qui remplace la surface plane de roulement 32 du mode de réalisation de la figure 1 et qui est également centrée sur l'axe U-U.

On décrira maintenant le mode de réalisation illustré aux figures 3 à 9.

Dans ce mode de réalisation, la tige de sortie 42 de l'actionneur linéaire 40 est reliée à la seconde extrémité 36 de la tige d'orientation 20 par l'intermédiaire d'un basculeur d'entraînement 60.

Le basculeur 60 présente une forme de L et est articulé autour d'un axe de basculement T-T parallèle à l'axe d'articulation X-X.

Le basculeur 60 comporte une première branche 62 dont l'extrémité comporte une lumière 64 dans laquelle est reçu un doigt d'entraînement 66 formé à l'extrémité de la tige de sortie 42 de l'actionneur 40.

L'actionneur 40 peut ainsi commander les déplacements en rotation de l'actionneur 60 autour de l'axe T-T, la lumière 64 étant orientée selon une direction sensiblement perpendiculaire à la direction de déplacement de la tige 42.

La seconde branche 68 du basculeur 60 comporte une fente ou lumière longitudinale 70 qui s'étend selon la direction longitudinale de la seconde branche 68 et qui reçoit un doigt 72 fixé à la seconde extrémité 36 de la tige d'orientation 20.

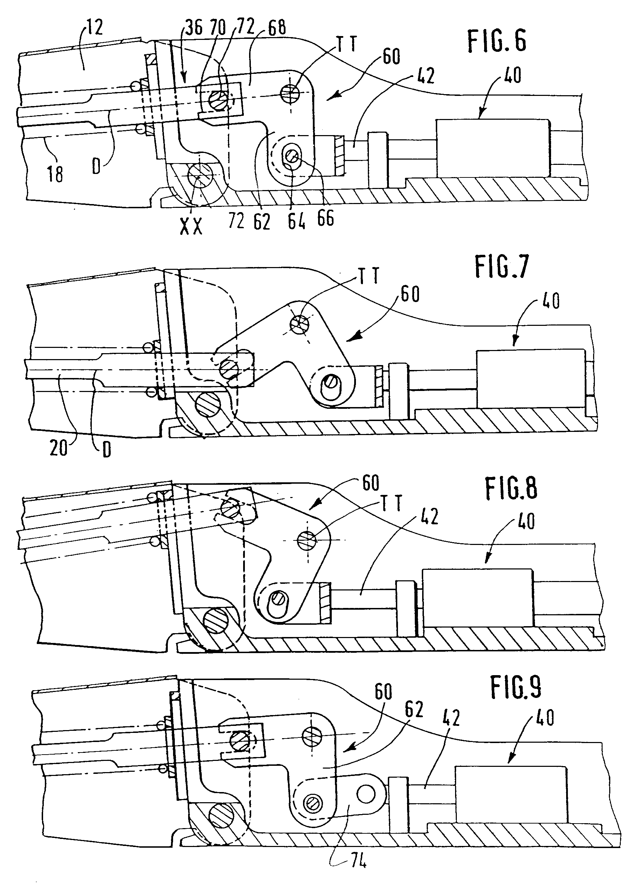

On décrira maintenant le fonctionnement de ce mode de réalisation en référence aux figures 6 à 8.

Dans la position illustrée à la figure 6, le ressort 18 applique au bras d'essuie-glace 12 un couple nominal moyen d'essuyage.

Si l'on désire provoquer un accroissement de la valeur du couple d'essuyage, par exemple en fonction de l'augmentation de la vitesse de déplacement du véhicule, il suffit de donner un ordre à l'actionneur linéaire 40 de manière à provoquer un déplacement linéaire, vers la droite en considérant la figure 6, de la tige 42 qui provoque une rotation du basculeur 60 dans le sens anti-horaire en considérant les figures.

La rotation du basculeur 60 provoque alors une rotation dans le sens horaire de la tige d'orientation 20, et donc un déplacement de la droite D qui provoque un accroissement du couple d'essuyage.

Au cours de ces déplacements, on constate que le doigt 72 s'est déplacé dans la fente 70 de même que le doigt 66 par rapport à la lumière 64.

D'une manière symétrique, on a illustré à la figure 8 une position relative des différents composants correspondant à un soulagement du bras d'essuie-glace, c'est-à-dire à une réduction de la valeur du couple d'essuyage.

A cet effet, la tige 42 de sortie de l'actionneur 40 a été déplacée vers la gauche en considérant la figure 6 et a donc provoqué un déplacement dans le sens horaire du basculeur 60 autour de son axe de basculement T-T.

Dans la variante de réalisation illustrée à la figure 9, l'association du doigt 66 avec une lumière 64 a été remplacée par une biellette d'articulation 74 dont les extrémités sont articulées respectivement sur l'extrémité libre de la tige 42 et au voisinage de l'extrémité de la première branche 62 du basculeur 60.

Dans la variante de réalisation illustrée à la figure 10, et si on la compare à celle illustrée à celle illustrée à la figure 9, l'extrémité libre de la seconde branche 68 du basculeur 60 est équipée d'un manchon 76 qui comporte un perçage 78 dans lequel est reçue la portion d'extrémité libre de la seconde extrémité 36 de la tige d'orientation 20 de manière que cette dernière puisse coulisser dans le perçage 78.

Le manchon 76 est monté articulé autour d'un axe 80 relié à l'extrémité libre de la seconde branche 68 du basculeur 60. Cet agencement est, du point de vue fonctionnel, équivalent à la coopération du doigt 72 avec la fente 70.

Etant donné l'amplitude relativement faible des déplacements en rotation du basculeur 60 autour de son axe T-T, la longueur du ressort hélicoïdal de compression 18 demeure sensiblement constante tandis que la position de la droite D par rapport à l'axe X-X varie de manière importante pour faire varier la valeur du couple d'essuyage.

L'invention n'est pas limitée aux modes de réalisation qui viennent d'être décrits.

Il est également possible de concevoir de nombreuses variantes permettant d'obtenir une loi de variation plus complexe de la valeur du couple d'essuyage par exemple en modifiant le profil de la came 44 ou en prévoyant des lumières profilées pour la liaison entre l'extrémité de la tige de sortie 42 et la branche 62 du basculeur 60.

## Revendications

1. Essuie-glace (10), notamment de véhicule automobile, du type comportant un bras d'essuie-glace (12) qui porte au moins un balai d'essuyage et qui est monté articulé, autour d'un axe d'articulation (X-X), sur une tête d'entraînement (16) du bras d'essuie-glace (12) comportant au moins un ressort (18) agencé entre la tête d'entraînement (16) et le bras d'essuie-glace (12), dont la première extrémité (26) dudit ressort est reliée à un point (24) du bras d'essuie-glace (12) et la seconde extrémité (28) du ressort (18) est reliée à la tête d'entraînement (16) et qui applique audit bras (12) une force dont la droite (D) support n'est pas concourante avec l'axe d'articulation (X-X) de manière à appliquer au bras d'essuie-glace (12) un couple d'essuyage et un actionneur (40) dont le corps est associé à la tête d'entraînement (16) et dont l'organe de sortie (42) commande les déplacements de la seconde extrémité du ressort (18) en faisant varier la position de la seconde extrémité du ressort par rapport à l'axe d'articulation (X-X), de manière à faire varier la distance (d) entre la droite support (D) de la force et l'axe d'articulation (X-X), la première extrémité (26) du ressort étant reliée à une première surface d'appui (24) reliée au bras d'essuie-glace (12) et la seconde extrémité (28) du ressort étant reliée à une seconde surface d'appui formée sur un patin (30) monté coulissant le long d'une surface de guidage (32, 54) formée sur la tête d'entraînement (16), les déplacements du patin (30) étant commandés par l'organe de sortie (42) de l'actionneur, caractérisé en ce que le ressort est un ressort hélicoïdal de compression (18) traversé par une tige d'orientation (20) qui définit la droite support (D) de la force, en ce qu'une première extrémité (22) de la tige d'orientation (20) est montée articulée sur le bras d'essuie-glace (12) autour d'un axe (U-U) parallèle à l'axe d'articulation (X-X) du bras d'essuie-glace (12) sur la tête d'entraînement (16), en ce que la tige d'orientation (20) traverse le patin d'appui (30), et en ce que la seconde extrémité (36) de la tige d'orientation (20) est reliée à l'organe de sortie (42) de l'actionneur (40).

2. Essuie-glace selon la revendication 1, caractérisé en ce que la seconde extrémité du ressort est susceptible de se déplacer sensiblement le long d'un cercle centré sur le point fixe auquel est reliée la première extrémité du ressort.

3. Essuie-glace selon la revendication 2, caractérisé en ce que la surface de guidage (54) du patin d'appui (30) est une portion de surface cylindrique concave dont l'axe est sensiblement confondu avec l'axe d'articulation (U-U) de la première extrémité de la tige d'orientation (20) sur le bras d'essuie-glace (12).

4. Essuie-glace selon la revendication 1, caractérisé en ce que la seconde extrémité du ressort est susceptible de se déplacer le long d'une droite (32) qui, pour une position intermédiaire médiane de la tige d'orientation (20), est sensiblement tangente à un cercle centré sur l'axe d'articulation (U-U) de la première extrémité (22) de la tige d'orientation (20) sur le bras d'essuie-glace (12).

5. Essuie-glace selon l'une quelconque des revendications 1 à 4, caractérisé en ce que l'actionneur est un actionneur linéaire (40) dont l'organe de sortie (42) est relié à une came (44) qui cooopère avec un galet (48) suiveur de came monté à rotation sur la seconde extrémité (36) de la tige d'orientation (20) autour d'un axe de rotation (V-V) parallèle à l'axe d'articulation U-U de la tige d'orientation (20) sur le bras d'essuie-glace (12).

6. Essuie-glace selon l'une quelconque des revendications 1 à 4, caractérisé en ce qu'il comporte un basculeur d'entraînement (60) monté à rotation sur la tête d'entraînement (16) autour d'un axe de basculement (T-T) parallèle à l'axe d'articulation (X-X) du bras d'essuie-glace (12) sur la tête d'entraînement (16), dont une première branche (62) est reliée à l'organe de sortie (42) de l'actionneur (40) et dont une seconde branche (68) est reliée à la seconde extrémité (36) de la tige d'orientation (20) de manière à guider les déplacements de cette dernière sensiblement le long d'un arc de cercle centré sur ledit axe de basculement (T-T).

7. Essuie-glace selon la revendication 6, caractérisé en ce que la seconde extrémité (36) de la tige d'orientation (20) est montée coulissante dans une fente (70, 78) d'entraînement formée dans la seconde branche (68) du basculeur (60) et qui s'étend selon la direction longitudinale de cette seconde branche (68).

## Claims

1. A screen wiper (10), especially for a motor vehicle, of the type comprising a screen wiper arm (12), which carries at least one wiper blade and which is articulated about an axis of articulation (X-X) on a drive head (16) of the screen wiper arm (12), which includes at least one spring (18) arranged between the drive head (16) and the screen wiper arm (12), in which the first end (26) of the said spring is coupled to a point (24) on the screen wiper arm (12) and the second end (28) of the spring (18) is connected to the drive head (16), with the spring applying to the said arm (12) a force the line of action (D) of which does not intersect the axis of articulation (X-X), so that the spring applies a wiping torque to the screen wiper arm (12), and an actuator (40), the body of which is associated with the drive head (16), with the output member (42) of the actuator controlling the displacements of the second end of the spring (18) by causing the position of the second end of the spring to be varied with respect to the axis of articulation (X-X), so as to cause the distance (d) between the line of action (D) of the force and the articulation axis (X-X) to be varied, the first end (26) of the spring being connected with a first thrust surface (24) joined to the screen wiper arm (12), and the second end (28) of the spring being connected with a second thrust surface formed on a pad (30), which is mounted for sliding movement along a guide surface (32, 54) formed on the drive head (16), the displacements of the pad (30) being controlled by the output member (42) of the actuator, characterised in that the spring is a helical compression spring (18) through which there passes an orientation rod (20) which defines the line of action (D) of the force, in that a first end (22) of the orientation rod (20) is articulated on the screen wiper arm (12) about an axis (U-U) parallel to the axis (X-X) of articulation of the screen wiper arm (12) on the drive head (16), in that the orientation rod (20) extends through the thrust pad (30), and in that the second end (36) of the orientation rod (20) is coupled to the output member (42) of the actuator (40).

2. A screen wiper according to Claim 1, characterised in that the second end of the spring is displaceable substantially along a circle centred on the fixed point to which the first end of the spring is coupled.

3. A screen wiper according to Claim 2, characterised in that the guide surface (54) for the thrust pad (30) is a portion of a concave cylindrical surface, the axis of which is substantially coincident with the axis (U-U) of articulation of the first end of the orientation rod (20) on the screen wiper arm (12).

4. A screen wiper according to Claim 1, characterised in that the second end of the spring is displaceable along a straight line (32) which, for a median intermediate position of the orientation rod (20), is substantially tangential to a circle centred on the axis (U-U) of articulation of the first end (22) of the orientation rod (20) on the screen wiper arm (12).

5. A screen wiper according to any one of Claims 1 to 4, characterised in that the actuator is a liner actuator (40), the output member (42) of which is connected to a cam (44) which cooperates with a cam follower roller (48) mounted for rotation on the second end (36) of the orientation rod (20) about an axis of rotation (V-V) parallel to the axis (U-U) of articulation of the orientation rod (20) on the screen wiper arm (12).

6. A screen wiper according to any one of Claims 1 to 4, characterised in that it includes a drive crank (60), mounted for rotation on the drive head (16) about a crank axis (T-T) parallel to the axis (X-X) of articulation of the screen wiper arm (12) on the drive head (16), the drive crank having a first branch (62) coupled to the output member (42) of the actuator (40), and a second branch (68) coupled to the second end (36) of the orientation rod (20), in such a way as to guide the displacements of the latter substantially along an arc of a circle centred on the said crank axis (T-T).

7. A screen wiper according to Claim 6, characterised in that the second end (36) of the orientation rod (20) is mounted for sliding movement in a drive slot (70, 78) formed in the second branch (68) of the crank (60) and extending in the longitudinal direction of the said second branch (68).

## Patentansprüche

1. Scheibenwischer (10), insbesondere für Kraftfahrzeuge, in der Ausführung mit einem Scheibenwischerarm (12), der wenigstens ein Wischblatt trägt und der gelenkig um eine Gelenkachse (X-X) an einem Antriebskopf (16) des Wischerarms (12) gelagert ist, mit wenigstens einer Feder (18), die zwischen dem Antriebskopf (16) und dem Scheibenwischerarm (12) angeordnet ist, wobei das erste Ende (26) der besagten Feder mit einem Punkt (24) des Scheibenwischerarms (12) verbunden ist, während das zweite Ende (28) der Feder (18) mit dem Antriebskopf (16) verbunden ist, und wobei auf den besagten Scheibenwischerarm (12) eine Kraft ausgeübt wird, deren Trägergerade (D) nicht mit der Gelenkachse (X-X) konvergent ist, so daß auf den Scheibenwischerarm (12) ein Wischeranpreßdruck ausgeübt wird, ferner mit einem Stellglied (40) dessen Körper mit dem Antriebskopf (16) verbunden ist und dessen Ausgangsorgan (42) die Bewegungen des zweiten Endes der Feder (18) steuert, indem es die Position des zweiten Endes der Feder im Verhältnis zur Gelenkachse (X-X) verändert, so daß der Abstand d zwischen der Trägergeraden (D) der Kraft und der Gelenkachse (X-X) verändert wird, wobei das erste Ende (26) der Feder mit einer ersten Auflagefläche (24) verbunden ist, die mit dem Scheibenwischerarm (12) verbunden ist, während das zweite Ende (28) der Feder mit einer zweiten Auflagefläche verbunden ist, die auf einem Gleitsegment (30) ausgebildet ist, das verschiebbar entlang einer am Antriebskopf (16) ausgebildeten Führungsfläche (32, 54) gelagert ist, wobei die Bewegungen des Gleitsegments (30) durch das Ausgangsorgan (42) des Stellglieds gesteuert werden, **dadurch gekennzeichnet,** daß es sich bei der Feder um eine Schraubendruckfeder (18) handelt, durch die eine Führungsstange (20) hindurchgeht, welche die Trägergerade (D) der Kraft definiert, daß ein erstes Ende (22) der Führungsstange (20) gelenkig am Scheibenwischerarm (12) um eine Achse (U-U) gelagert ist, die parallel zur Gelenkachse (X-X) des Scheibenwischerarms (12) am Antriebskopf (16) verläuft, daß die Führungsstange (20) durch das Auflagesegment (30) hindurchgeht und daß das zweite Ende (36) der Führungsstange (20) mit dem Ausgangsorgan (42) des Stellglieds (40) verbunden ist.

2. Scheibenwischer nach Anspruch 1 , **dadurch gekennzeichnet,** daß sich das zweite Ende der Feder in etwa entlang einem Kreis um den Festpunkt bewegen kann, mit dem das erste Ende der Feder verbunden ist.

3. Scheibenwischer nach Anspruch 2 , **dadurch gekennzeichnet,** daß die Führungsfläche (54) des Auflagesegments (30) eine konkav-zylindrische Teilfläche ist, deren Achse in etwa mit der Gelenkachse (U-U) des ersten Endes der Führungsstange (30) am Scheibenwischerarm (12) zusammenfällt.

4. Scheibenwischer nach Anspruch 1 , **dadurch gekennzeichnet,** daß sich das zweite Ende der Feder entlang einer Geraden (32) bewegen kann, die bei einer mittleren Zwischenposition der Führungsstange (20) in etwa tangential zu einem Kreis um die Gelenkachse (U-U) des ersten Endes (22) der Führungsstange (20) am Scheibenwischerarm (12) verläuft.

5. Scheibenwischer nach einem der Ansprüche 1 bis 4, **dadurch gekennzeichnet,** daß das Stellglied ein lineares Stellglied (40) ist, dessen Ausgangsorgan (42) mit einem Nocken (44) verbunden ist, der mit einer Kurvenrolle (48) zusammenwirkt, die drehbar am zweiten Ende (36) der Führungsstange (20) um eine Drehachse (V-V) gelagert ist, die parallel zur Gelenkachse (U-U) der Führungsstange (20) am Scheibenwischerarm (12) verläuft.

6. Scheibenwischer nach einem der Ansprüche 1 bis 4, **dadurch gekennzeichnet,** daß er ein Antriebskippelement (60) umfaßt, das drehbar am Antriebskopf (16) um eine zur Gelenkachse (X-X) des Scheibenwischerarms (12) am Antriebskopf (16) parallele Kippachse (T-T) gelagert ist und dessen erster Schenkel (62) mit dem Ausgangsorgan (42) des Stellglieds (40) verbunden ist, während sein zweiter Schenkel (68) mit dem zweiten Ende (36) der Führungsstange (20) verbunden ist, um deren Bewegungen in etwa entlang einem Kreisbogen um die besagte Kippachse (T-T) zu führen.

7. Scheibenwischer nach Anspruch 6 , **dadurch gekennzeichnet,** daß das zweite Ende (36) der Führungsstange (20) verschiebbar in einem Mitnahmeschlitz (70, 78) gelagert ist, der im zweiten Schenkel (68) des Kippelements (60) ausgebildet ist und der sich in der Längsrichtung dieses zweiten Schenkels (68) erstreckt.
